# DEMANDE DE BREVET EUROPEEN

(11) **EP 2 397 389 A1**
(43) Date de publication de la demande: **21.12.2011**
(21) Numéro de dépôt: 11167868.6
(22) Date de dépôt: 27.05.2011
(51) Int. Cl.: B62C 1/06

(54) **Véhicule hippomobile a caisson amovible, et application**

(30) Priorité: 21.06.2010 FR 1054906
(71) Demandeur: VEOLIA PROPRETE, 92000 Nanterre (FR)
(72) Inventeur: Faure, Michel, 33640 Portets (FR); Couttelle, Loic, 59110 La Madeleine (FR)
(74) Mandataire: Novagraaf Technologies

(57) **Abrégé**

L'invention concerne un véhicule hippomobile comprenant un châssis (1), des roues (21, 22) portant le châssis, et des moyens d'attelage (3).

Le véhicule de l'invention comprend en outre un plan de roulement (4) et un caisson amovible (5), le plan de roulement (4) étant monté basculant, autour d'un axe de rotation (Y1) fixe par rapport au châssis (1) et perpendiculaire au plan longitudinal médian du véhicule, entre une position de transport horizontale et une position de chargement ou de déchargement inclinée vers l'arrière, et le caisson (5) étant conçu pour être sélectivement posé sur le plan de roulement (4) et accroché au châssis (1) dans la position de transport, et pour rouler sur le plan de roulement (4) dans la position de chargement ou de déchargement.

## Description

L'invention concerne, de façon générale, les techniques de transport terrestre de matières.

Plus précisément, l'invention concerne, selon un premier aspect, un véhicule hippomobile comprenant un châssis présentant une partie avant, une partie arrière et un plan médian longitudinal et vertical, un ensemble de roues portant le châssis et incluant deux roues latérales disposées de part et d'autre du plan médian, et des moyens d'attelage équipant la partie avant du châssis.

Bien que les véhicules hippomobiles soient connus depuis des temps ancestraux, le choix de recourir, aujourd'hui, à un véhicule de ce type pour le transport de matières impose des contraintes de conception nouvelles, liées notamment à la volonté de respecter, pour les animaux, des conditions de travail exemptes de pénibilité.

L'invention, qui se situe dans ce contexte, a précisément pour but de proposer un véhicule hippomobile répondant à ce besoin.

A cette fin, le véhicule de l'invention, par ailleurs conforme à la définition générique qu'en donne le préambule ci-dessus, est essentiellement caractérisé en ce qu'il comprend en outre un plan de roulement et un caisson amovible, en ce que le plan de roulement est monté basculant, autour d'un premier axe de rotation fixe par rapport au châssis et perpendiculaire au plan médian, entre une position de transport sensiblement horizontale et une position de chargement ou de déchargement inclinée vers l'arrière, et en ce que le caisson est conçu pour être sélectivement posé sur le plan de roulement et accroché au châssis dans la position de transport, et pour rouler sur le plan de roulement dans la position de chargement ou de déchargement.

Dans le mode de réalisation préféré de ce véhicule, il est prévu que les deux roues latérales soient montées à rotation autour d'essieux respectifs portés par le châssis au-dessus du plan de roulement, et que le plan de roulement présente un débattement angulaire au plus égal à 8 degrés par rapport au châssis.

Par exemple, le plan de roulement comprend au moins un cadre rectangulaire dont deux côtés longitudinaux parallèles au plan médian sont équipés de galets de roulement.

Le plan de roulement peut notamment s'inscrire entre deux longerons du châssis, ce plan de roulement pouvant ainsi être monté basculant autour de deux pivots alignés et respectivement portés par ces longerons.

Dans ce cas, les pivots et les essieux des deux roues latérales sont avantageusement disposés dans un même plan transversal, perpendiculaire au plan médian du véhicule et sensiblement vertical.

Par ailleurs, le véhicule comprend de préférence un cric disposé entre le châssis et le plan de roulement et conçu pour contrôler le basculement du plan de roulement autour du premier axe de rotation.

Ce véhicule peut aussi comprendre un treuil porté par la partie avant du châssis et conçu pour enrouler ou dérouler sélectivement un câble dont une extrémité externe au treuil est sélectivement liée de façon amovible au caisson.

Il peut également être judicieux de prévoir que la partie avant du châssis comporte un timon central fixe, que l'ensemble de roues comprenne, en plus des deux roues latérales, une roue centrale directrice montée à rotation libre autour d'un deuxième axe, sensiblement horizontal, sur une fourche elle-même montée à rotation sur le timon autour d'un troisième axe sensiblement vertical, et que les moyens d'attelage comprennent un brancard lié en rotation à la fourche autour du troisième axe, et pivotant par rapport à la fourche autour d'un quatrième axe sensiblement parallèle au deuxième axe.

Le poids du caisson peut par ailleurs être réduit en prévoyant que ce caisson soit au moins partiellement réalisé dans un matériau composite présentant une structure en nid d'abeille.

Le véhicule tel que précédemment défini est particulièrement bien adapté à la collecte de déchets.

D'autres caractéristiques et avantages de l'invention ressortiront clairement de la description qui en est faite ci-après, à titre indicatif et nullement limitatif, en référence aux dessins annexés, dans lesquels :

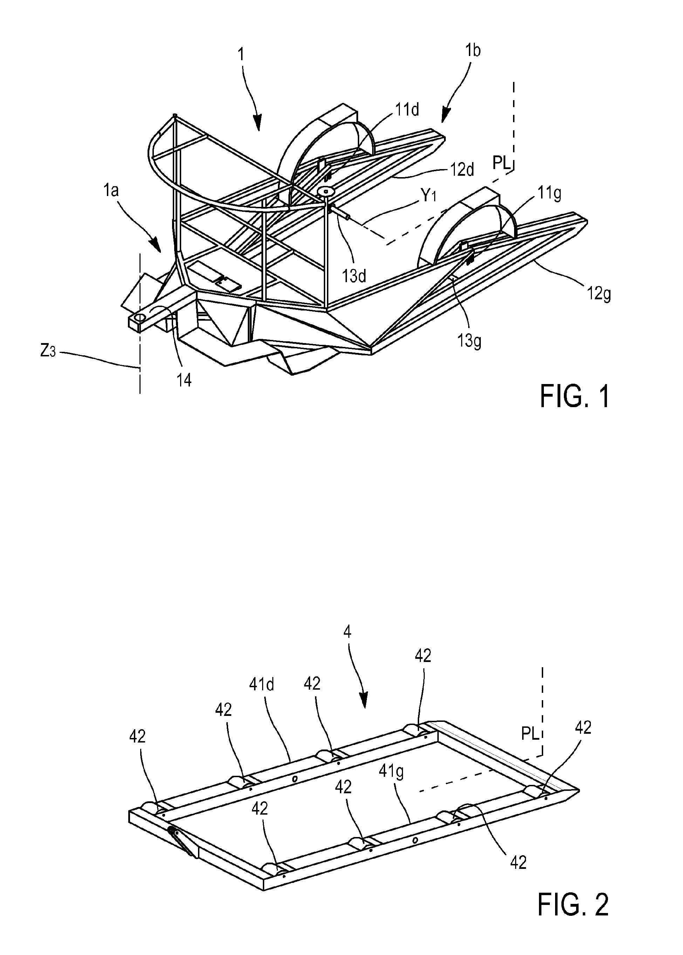

- la figure 1 est une vue en perspective partielle du châssis d'un véhicule conforme à l'invention;
- la figure 2 est une vue en perspective d'un plan de roulement utilisable dans un véhicule conforme à l'invention;
- la figure 3 est une vue en perspective, à une échelle agrandie par rapport à celle de la figure 1, d'une fourche utilisable dans un véhicule conforme à l'invention;
- la figure 4 est une vue en perspective d'un brancard utilisable dans un véhicule conforme à l'invention;
- la figure 5 est une vue de côté d'un véhicule conforme à l'invention, équipé d'un caisson représenté en position de transport;
- la figure 6 est une vue de côté d'un véhicule conforme à l'invention, équipé d'un caisson représenté dans une position de chargement ou de déchargement;
- la figure 7 est une vue de côté d'un véhicule conforme à l'invention dont le caisson a été déchargé ou va être chargé;
- la figure 8 est une vue partielle en perspective d'un véhicule conforme à l'invention, observé par le dessous et du côté de la partie avant du châssis, cette vue illustrant notamment un cric utilisable dans un tel véhicule; et
- la figure 9 est une vue partielle en perspective d'un véhicule conforme à l'invention observé par le dessous, cette vue illustrant notamment un treuil utilisable dans un tel véhicule.

Comme annoncé précédemment, l'invention concerne un véhicule hippomobile comprenant un châssis 1, un ensemble de roues 21 et 22, et des moyens d'attelage 3.

Le châssis 1, qui présente une partie avant la en l'occurrence dotée d'un timon central fixe 14, et une partie arrière 1b, est au moins sensiblement symétrique par rapport à un plan médian longitudinal et vertical PL.

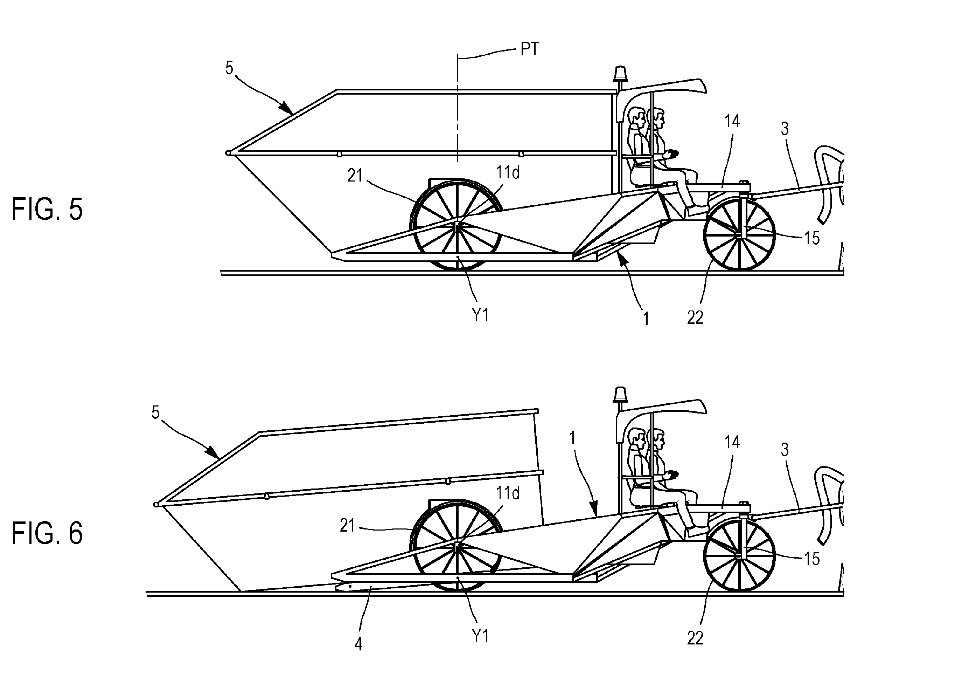

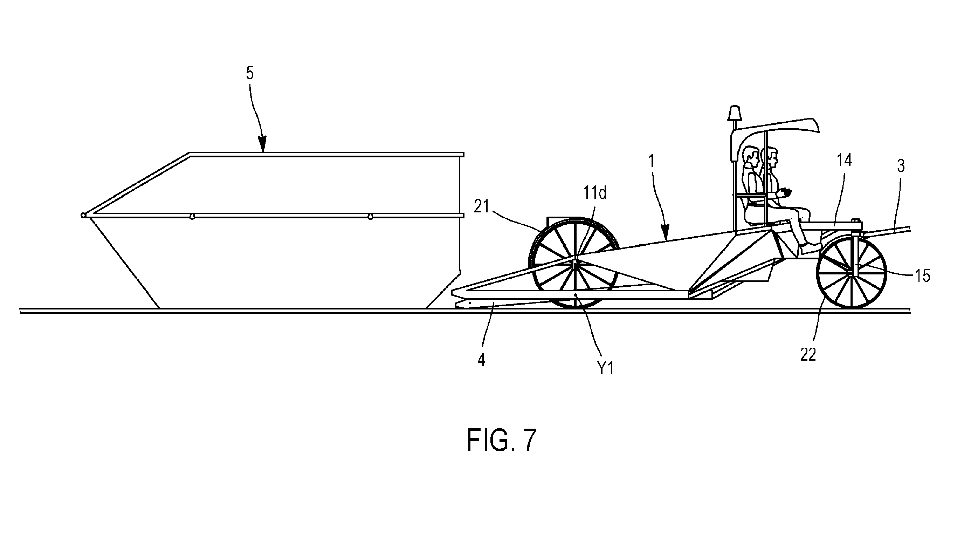

Les roues 21 et 22 (figures 5 à 7) portent le châssis 1 et comprennent notamment deux roues latérales 21 disposées de part et d'autre du plan médian PL, et une roue centrale directrice 22.

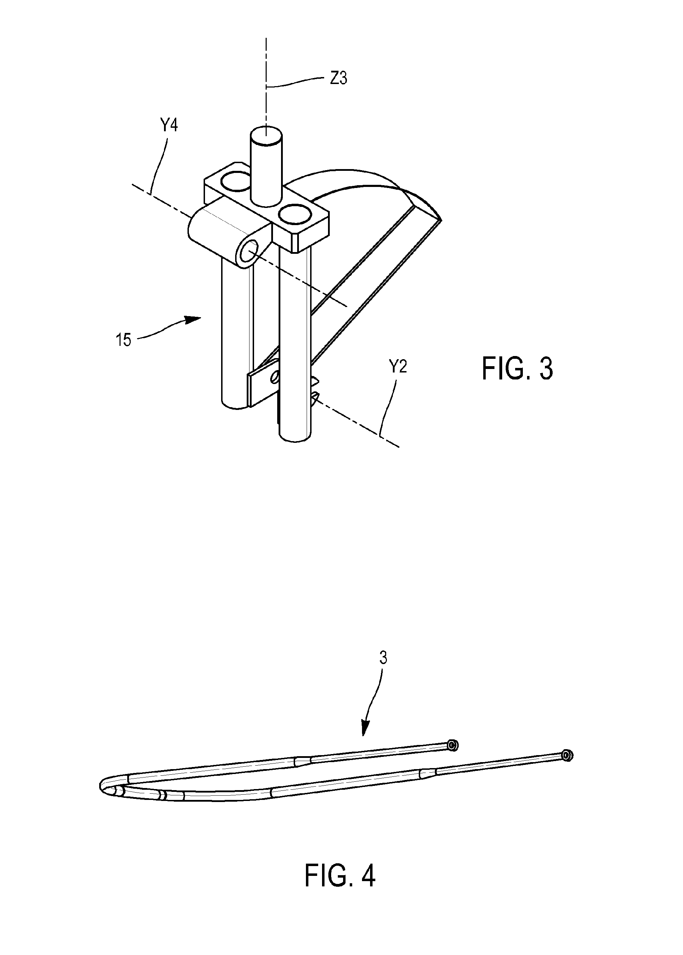

La roue directrice 22 est montée à rotation libre, autour d'un axe Y2 sensiblement horizontal, sur une fourche 15 (figure 3) elle-même montée à rotation sur le timon 14 autour d'un axe Z3 sensiblement vertical.

Les moyens d'attelage 3 (figures 3 et 4) équipent la partie avant la du châssis 1 et sont par exemple essentiellement constitués par un brancard 3 lié en rotation à la fourche 15 autour de l'axe Z3, et pivotant par rapport à la fourche 15 autour d'un axe Y4 sensiblement parallèle à l'axe Y2.

Le véhicule hippomobile de l'invention comprend en outre un plan de roulement 4 et un caisson amovible 5.

Le plan de roulement 4 est monté basculant, autour d'un axe de rotation Y1, entre une position de transport sensiblement horizontale visible sur la figure 5, et une position de chargement ou de déchargement inclinée vers l'arrière, visible sur la figure 6.

Par exemple, le plan de roulement 4 s'inscrit entre deux longerons 12d et 12g du châssis 1, et l'axe de rotation Y1 est formé par deux pivots alignés 13d et 13g, respectivement portés par ces longerons 12d et 12g.

L'axe de rotation Y1 ainsi défini est fixe par rapport au châssis 1 et perpendiculaire au plan médian PL du véhicule.

Les deux roues latérales 21 sont montées à rotation autour d'essieux respectifs 11d et 11g qui sont portés par le châssis 1 et qui, dans la position normale d'utilisation du véhicule, sont disposés au-dessus du plan de roulement 4.

Le plan de roulement 4 se trouve ainsi proche du sol, de sorte que sa partie arrière peut, en position de chargement ou de déchargement, être abaissée jusqu'au sol par un basculement de faible amplitude de ce plan de roulement autour de l'axe Y1.

En pratique, il est souhaitable que le plan de roulement 4 présente un débattement angulaire au plus égal à 8 degrés par rapport au châssis 1, et par exemple de l'ordre de 4 ou 5 degrés.

Dans le mode de réalisation illustré, le plan de roulement 4 est essentiellement constitué d'un cadre rectangulaire dont deux côtés longitudinaux 41d et 41g, s'étendant parallèlement au plan médian PL, sont équipés de galets de roulement 42.

Les pivots 13d et 13g du plan de roulement 4, et les essieux 11d et 11g des roues latérales 21, sont de préférence disposés dans un même plan transversal PT, qui est perpendiculaire au plan médian PL et sensiblement vertical (figure 5).

De plus, la position du plan transversal PT est avantageusement choisie pour que ce plan PT passe à proximité, et légèrement vers l'arrière, du centre de gravité du caisson 5 une fois chargé.

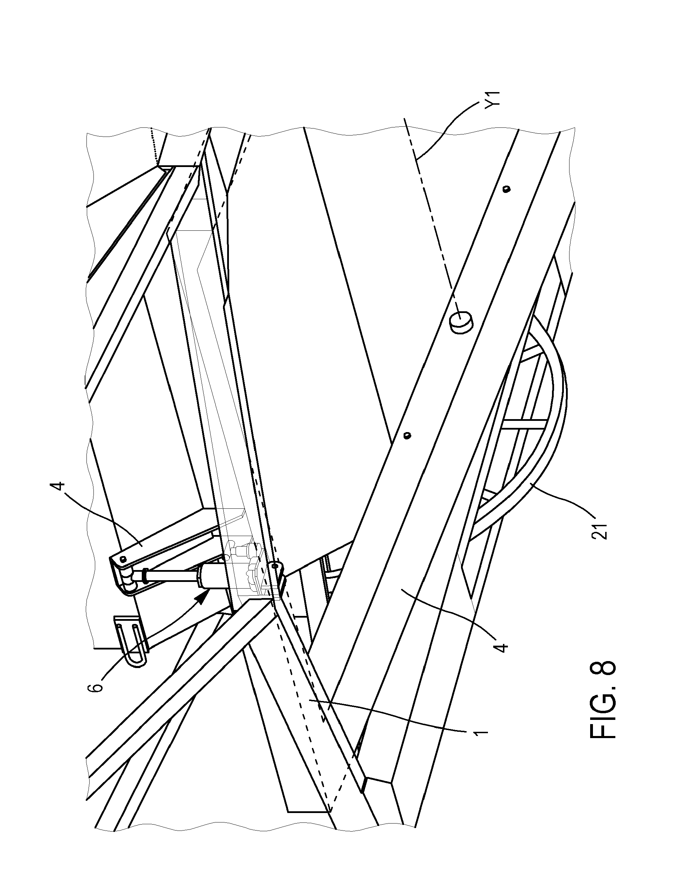

Le basculement du plan de roulement 4 autour de l'axe de rotation Y1 par rapport au châssis 1 est par exemple contrôlé par un cric 6 visible sur la figure 8.

Ce cric 6 comprend classiquement un corps et une tige, une extrémité du corps étant liée en rotation au châssis 1 et une extrémité de la tige étant liée en rotation au plan de roulement 4, ou l'inverse.

Dans l'état de repos du cric 6, le plan de roulement 4 est en position de transport, la position de chargement ou de déchargement de ce plan de roulement étant obtenue en plaçant le cric 6 dans son état d'extension tel qu'illustré à la figure 8.

Le caisson 5 est quant à lui conçu pour reposer sur le plan de roulement 4, et pour pouvoir rouler sur ce plan de roulement.

Plus précisément, lorsque ce caisson 5 est embarqué sur le châssis 1 et que le plan de roulement 4 est en position de transport, le caisson 5 est posé sur le plan de roulement 4 et accroché au châssis 1.

En revanche, lorsque le plan de roulement 4 dans sa position de chargement ou de déchargement, le caisson 5 peut rouler sur le plan de roulement 4.

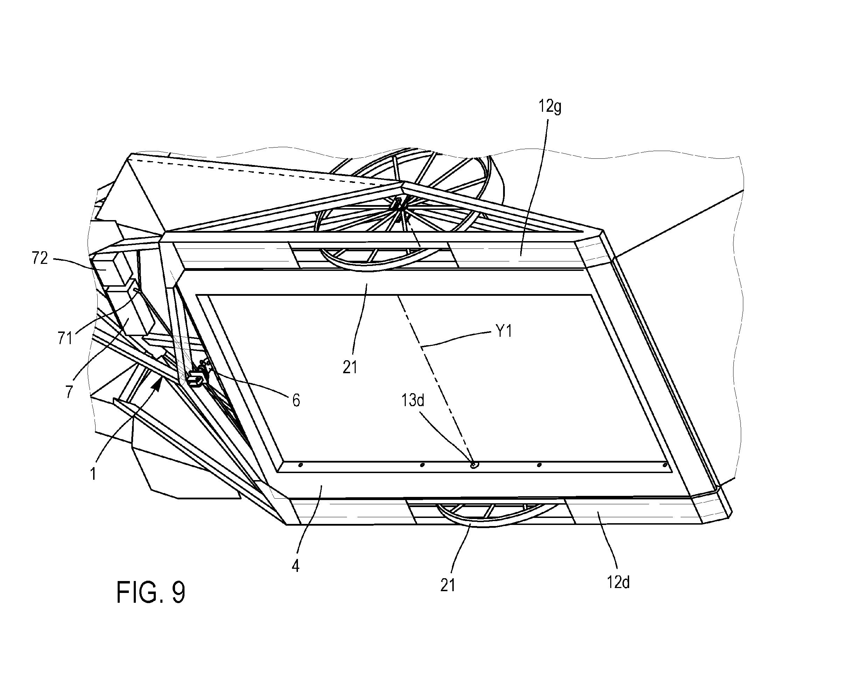

Le roulement du caisson 5 sur le plan de roulement 4 est par exemple contrôlé par un treuil 7 visible sur la figure 9.

Ce treuil 7 est porté par la partie avant la du châssis 1 et conçu pour enrouler ou dérouler sélectivement un câble 71.

En l'occurrence, le treuil 7 représenté est un treuil électrique alimenté à volonté par une batterie 72.

L'extrémité du câble 71 qui se trouve à l'extérieur du treuil 7 peut être accrochée de façon amovible au caisson 5, par exemple au moyen de crochets (non visibles) disposés sur chacun des côtés longitudinaux du caisson 5.

Lorsque ce caisson 5 est embarqué sur le châssis 1 et que le plan de roulement 4 est en position de transport, le caisson 5 est donc notamment accroché au châssis 1 par l'intermédiaire du câble 71 et du treuil 7.

Cependant, des goupilles de sécurité (non visibles) sont de préférence prévues pour assurer la sécurisation de l'ensemble au moins dans la position de transport du plan de roulement 4, notamment en rendant ce plan de roulement 4 solidaire du châssis 1 dans cette position de transport, et / ou en rendant le caisson 5 solidaire du châssis 1 et / ou du plan de roulement 4 dans cette même position de transport.

Le caisson 5 est avantageusement réalisé, au moins partie, dans un matériau composite présentant une structure en nid d'abeille de manière à présenter un poids réduit.

Le véhicule hippomobile tel que décrit est particulièrement bien adapté à la collecte de déchets.

## Revendications

1. Véhicule hippomobile comprenant un châssis (1) présentant une partie avant (1a), une partie arrière (1b) et un plan médian longitudinal et vertical (PL), un ensemble de roues (21, 22) portant le châssis (1) et incluant deux roues latérales (21) disposées de part et d'autre du plan médian (PL), et des moyens d'attelage (3) équipant la partie avant (1a) du châssis (1), ce véhicule comprenant en outre un plan de roulement (4) et un caisson amovible (5), le plan de roulement (4) étant monté basculant, autour d'un premier axe de rotation (Y1) fixe par rapport au châssis (1) et perpendiculaire au plan médian (PL), entre une position de transport sensiblement horizontale et une position de chargement ou de déchargement inclinée vers l'arrière, et le caisson (5) étant conçu pour être sélectivement posé sur le plan de roulement (4) et accroché au châssis (1) dans la position de transport, et pour rouler sur le plan de roulement (4) dans la position de chargement ou de déchargement, le véhicule étant **caractérisé en ce que** les deux roues latérales (21) sont montées à rotation autour d'essieux respectifs (11d, 11g) portés par le châssis au-dessus du plan de roulement.

2. Véhicule hippomobile suivant la revendication 1, **caractérisé en ce que** le plan de roulement (4) présente un débattement angulaire au plus égal à 8 degrés par rapport au châssis (1).

3. Véhicule hippomobile suivant l'une quelconque des revendications précédentes, **caractérisé en ce que** le plan de roulement (4) comprend au moins un cadre rectangulaire dont deux côtés longitudinaux (41d, 41g) parallèles au plan médian (PL) sont équipés de galets de roulement (42).

4. Véhicule hippomobile suivant l'une quelconque des revendications précédentes, **caractérisé en ce que** le plan de roulement (4) s'inscrit entre deux longerons (12d, 12g) du châssis (1), et **en ce que** ce plan de roulement (4) est monté basculant autour de deux pivots (13d, 13g) alignés et respectivement portés par ces longerons (12d, 12g).

5. Véhicule hippomobile suivant les revendications 2 et 4, **caractérisé en ce que** les pivots (13d, 13g) et les essieux (11d, 11g) sont disposés dans un même plan transversal (PT), perpendiculaire au plan médian (PL) et sensiblement vertical.

6. Véhicule hippomobile suivant l'une quelconque des revendications précédentes, **caractérisé en ce qu'**il comprend un cric (6) disposé entre le châssis (1) et le plan de roulement (4) et conçu pour contrôler le basculement du plan de roulement (4) autour du premier axe de rotation (Y1).

7. Véhicule hippomobile suivant l'une quelconque des revendications précédentes, **caractérisé en ce qu'**il comprend un treuil (7) porté par la partie avant (1a) du châssis (1) et conçu pour enrouler ou dérouler sélectivement un câble (71) dont une extrémité externe au treuil est sélectivement liée de façon amovible au caisson (5).

8. Véhicule hippomobile suivant l'une quelconque des revendications précédentes, **caractérisé en ce que** la partie avant (1a) du châssis (1) comporte un timon central fixe (14), **en ce que** l'ensemble de roues (21, 22) comprend, en plus des deux roues latérales (21), une roue centrale directrice (22) montée à rotation libre autour d'un deuxième axe (Y2), sensiblement horizontal, sur une fourche (15) elle-même montée à rotation sur le timon (14) autour d'un troisième axe (Z3) sensiblement vertical, et **en ce que** les moyens d'attelage (3) comprennent un brancard (3) lié en rotation à la fourche (15) autour du troisième axe (Z3), et pivotant par rapport à la fourche (15) autour d'un quatrième axe (Y4) sensiblement parallèle au deuxième axe (Y2).

9. Véhicule hippomobile suivant l'une quelconque des revendications précédentes, **caractérisé en ce que** le caisson (5) est au moins partiellement réalisé dans un matériau composite présentant une structure en nid d'abeille.

10. Application d'un véhicule suivant l'une quelconque des revendications précédentes à la collecte de déchets.
